# EUROPÄISCHE PATENTANMELDUNG

(11) **EP 1 310 145 A2**
(43) Veröffentlichungstag der Anmeldung: **14.05.2003**
(21) Anmeldenummer: 02024315.0
(22) Anmeldetag: 02.11.2002
(51) Int. Cl.: A01B 63/26, A01B 71/02

(54) **Bodenbearbeitungsgerät mit mehreren Geräteeinheiten**

(30) Priorität: 07.11.2001 DE 10154223
(71) Anmelder: Amazonen-Werke H. Dreyer GmbH & Co. KG, 49205 Hasbergen (DE)
(72) Erfinder: Goretzko, Robert, 28201 Bremen (DE)

(57) **Zusammenfassung**

Bodenbearbeitungsgerät mit mehreren Geräteeinheiten, die mit vor- oder nachgeordneten Bearbeitungsorganen, wie beispielsweise Walzen, Planierbalken ausgestattet sind, wobei jedes Bearbeitungsorgan jeweils über zumindest zwei Arme höhenverstellbar mit den Geräteeinheiten verbunden und über die Arbeitstiefe der Geräteeinheiten vorgebende Stelleinrichtung einstellbar ist, wobei jedem Arm eine Stelleinrichtung zugeordnet ist und zumindest die einer Geräteeinheit zugeordneten Stelleinrichtungen von einer zentralen Stelle aus betätigbar sind. Um Bodenbearbeitungsgerät mit mehreren Geräteeinheiten, die mit vor- oder nachgeordneten Bearbeitungsorganen, wie beispielsweise Walzen, Planierbalken ausgestattet sind, wobei jedes Bearbeitungsorgan jeweils über zumindest zwei Arme höhenverstellbar mit den Geräteeinheiten verbunden und über die Arbeitstiefe der Geräteeinheiten vorgebende Stelleinrichtung einstellbar ist, wobei jedem Arm eine Stelleinrichtung zugeordnet ist und zumindest die einer Geräteeinheit zugeordneten Stelleinrichtungen von einer zentralen Stelle aus betätigbar sind, dadurch gekennzeichnet, dass die Stelleinrichtungen als Exzenterscheiben ausgebildet sind, dass die Exzenterscheiben einer Geräteeinheit auf einer drehbar gelagerten Stange drehfest angeordnet sind, dass der Stange eine Fixierungseinrichtung zugeordnet ist, ist vorgesehen, dass die Stelleinrichtungen als Exzenterscheiben ausgebildet sind, dass die Exzenterscheiben einer Geräteeinheit auf einer drehbar gelagerten Stange drehfest angeordnet sind, dass der Stange eine Fixierungseinrichtung zugeordnet ist.

## Beschreibung

Die Erfindung betrifft ein Bodenbearbeitungsgerät mit mehreren Geräteeinheiten gemäß des Oberbegriffes des Anspruches 1.

Ein derartiges Bodenbearbeitungsgerät ist beispielsweise in der DE-198 17 544 A1 beschrieben. Bei diesem Bodenbearbeitungsgerät ist die Einstelleinrichtung zwischen den Geräteeinheiten und den nachgeordneten Bearbeitungsorganen von der Seite her durch Verschieben einer Stange mit treppenförmigen Einstellelementen einstellbar.

Der Erfindung liegt die Aufgabe zugrunde, eine einfache fernbedienbare Stellvorrichtung zu schaffen.

Diese Aufgabe wird in einer ersten Lösung dadurch gelöst, dass die Stelleinrichtungen als Exzenterscheiben ausgebildet sind, dass die Exzenterscheiben einer Geräteeinheit auf einer drehbar gelagerten Stange drehfest angeordnet sind, dass der Stange eine Fixierungseinrichtung zugeordnet ist. Infolge dieser Maßnahmen kann durch eine einfache Drehung der Exzenterscheiben, die Lage der Teile zueinander eingestellt werden.

Eine einfache Fixierung der Exzenterscheiben wird dadurch erreicht, dass die Fixierungseinrichtung als Lochscheibe ausgebildet ist und mit einem Bolzen zusammenwirkt.

Um eine senkrechte Krafteinleitung zwischen dem Bearbeitungsorgan und der jeweiligen Exzenterscheibe zu erreichen, ist vorgesehen, dass die Exzenterscheibe auf ihrem Umfang Einkerbungen aufweist, welche mit einer an dem Arm angeordneten Erhebung zusammenwirkt. Durch diese kraftschlüssige Verbindung treten keine Verdrehkräfte auf die Exzenterscheibe auf.

Eine weitere Lösung der Aufgabe wird dadurch erreicht, dass die Stelleinrichtung als versetzbarer Bolzen ausgebildet ist, dass der von dem Außenbereich des Bodenbearbeitungsgerätes entfernt liegende Bolzen an einer von dem Außenbereich des Bodenbearbeitungsgerätes betätigbaren Stange angeordnet ist.

Infolge dieser Maßnahmen kann der Bolzen über die Stange in das jeweilige Loch einer Lochreihe eines Verstellelementes von außen eingesetzt werden.

Um den Bolzen einfach in das jeweilige Loch der Lochreihe einführen zu können, ist vorgesehen, dass der Bolzen im begrenzten Umfang beweglich an der Stange befestigt ist. Hierbei hat sich gezeigt, dass es vorteilhaft ist, dass die Beweglichkeit des Bolzen etwa 4 bis 10 Grad, vorzugsweise 6 Grad gegenüber der Stange beträgt.

Um eine einfache Einführung des Bolzens über die Stange von dem Außenbereich der Maschine zu erreichen, ist vorgesehen dass die Stange etwa in der Mitte zwischen dem Außenbereich der Geräteeinheit und dem Bolzen in einem Schiebe- und Drehführungselement , welches an der Geräteeinheit angeordnet ist, führend und abstützend auflegbar ist.

Weitere Einzelheiten der Erfindung sind den übrigen Unteransprüchen, der Beispielsbeschreibung und den Zeichnungen zu entnehmen. Hierbei zeigen
- Fig. 1: die Stelleinrichtung eines Bodenbearbeitungsgerätes in perspektivischer und schematischer Darstellungsweise und
- Fig. 2: eine weitere Stelleinrichtung eines Bodenbearbeitungsgerätes in perspektivischer und schematischer Darstellungsweise.

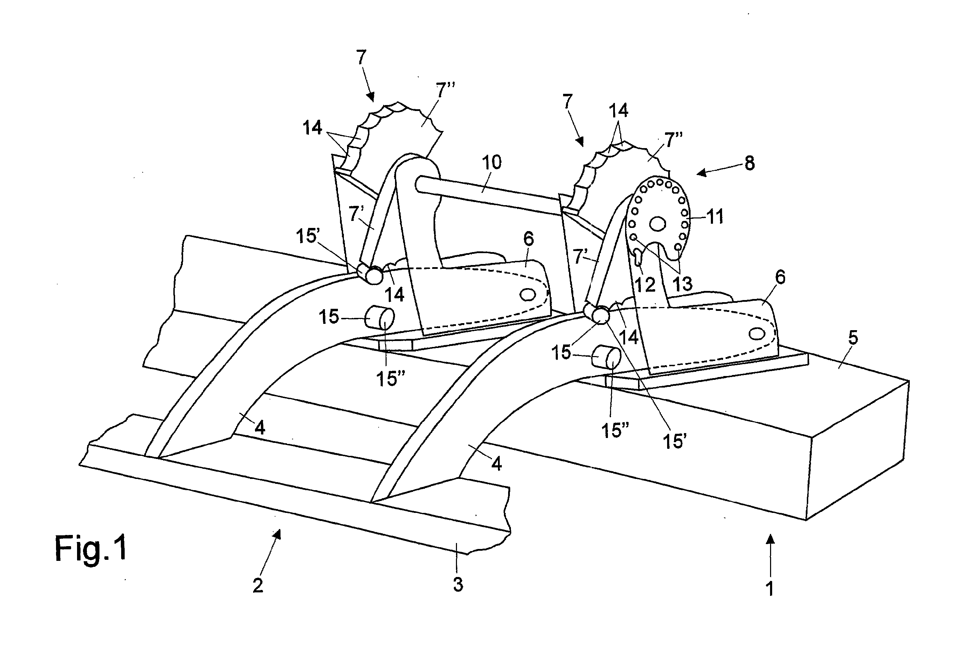

Die Fig. 1 zeigt in perspektivischer Darstellung die Zuordnung einer Geräteeinheit 1 mit nachgeordneter Packerwalze 2 eines Bodenbearbeitungsgerätes in perspektivischer und schematischer Darstellung. Es ist nur die rechte Seite des Bodenbearbeitungsgerätes dargestellt, wobei dieses Bodenbearbeitungsgerät aus zwei zueinander einklappbaren Teilen besteht. Die Geräteeinheit 1 kann als Kreiselegge oder Kreiselgrubber, der motorisch angetrieben ist, ausgebildet sein. Hinter der Geräteeinheit 1 ist die Walze 2, von der nur der obere Querbalken 3 und die Tragarme 4 dargestellt sind, angeordnet. Die folgende Beschreibung gilt auch für eine Tiefen- bzw. Höheneinstellung eines Planierbalkens oder eines anderen nachgeordneten Bearbeitungsorgans. Auf dem Träger 5 der Geräteeinheit 1 sind Anschlussstellen 6 für die Tragarme 4 einer nachlaufenden Walze 2 angeordnet. Über die Nachlaufwalze 2 kann die Arbeitstiefe der Arbeitswerkzeuge der vorlaufenden Geräteeinheit 1 eingestellt werden. Hierzu ist die die Exzenterscheiben 7 aufweisende Stelleinrichtung 8 vorgesehen. Die Walze 2 ist mit zwei Tragarmen 4 an dem Tragelement 6 der Geräteeinheit 1 angelenkt. Jedem Tragarm 4 ist eine aus zwei Teilexzenterscheiben 7,7' bestehende Stelleinrichtung 8 zugeordnet, die über eine Stange 10 drehfest miteinander verbunden sind. Des weiteren ist auf der Außenseite der Geräteeinheit 1 die als Lochscheibe 11 ausgebildete Fixierungseinrichtung angeordnet. Diese Fixierungsscheibe 11 wirkt mit einem Bolzen 12 zusammen, der jeweils durch ein Loch der Lochscheibe 11 gesteckt wird. Dieser Bolzen 12 wirkt dann mit dem Kupplungsstück des Tragelementes 6 zusammen. Die Exzenterscheiben 7 weisen auf ihrem Umfang Einkerbungen 14 auf. Diese Einkerbungen 14 wirken jeweils entsprechendjeweiligen der Einstellung mit einer an dem Tragarm 4 angeordneten Erhebung 15 zusammen. Die Exzenterscheibe 7 für geringere Arbeitstiefen, wie die Fig. 1 zeigt, wirkt mit der die Einkerbungen 14 bildenden oberen Bolzen 15' zusammen, während die Exzenterscheiben 8'' für größere Arbeitstiefen mit dem unteren Bolzen 15'', der die Erhebung 15 bildet zusammenwirken. Die unteren Bolzen 15'', ragen auf der anderen Seite aus dem Tragarm 4 heraus, da die Tragarme 4 gleich ausgebildet sind.

Dadurch, dass die Einkerbungen 14 der Exzenterscheibe 7 mit den Erhebungen 15 an dem Arm 4 zusammenwirken, treten keine Drehmomente auf die Einstellwelle 10 auf.

Wie leicht einzusehen ist, kann durch einfaches Verdrehen der Fixierungsscheiben 11 mit den Exzenterscheiben 7 von der Außenseite einfache zentral die Arbeitstiefe eingestellt werden.

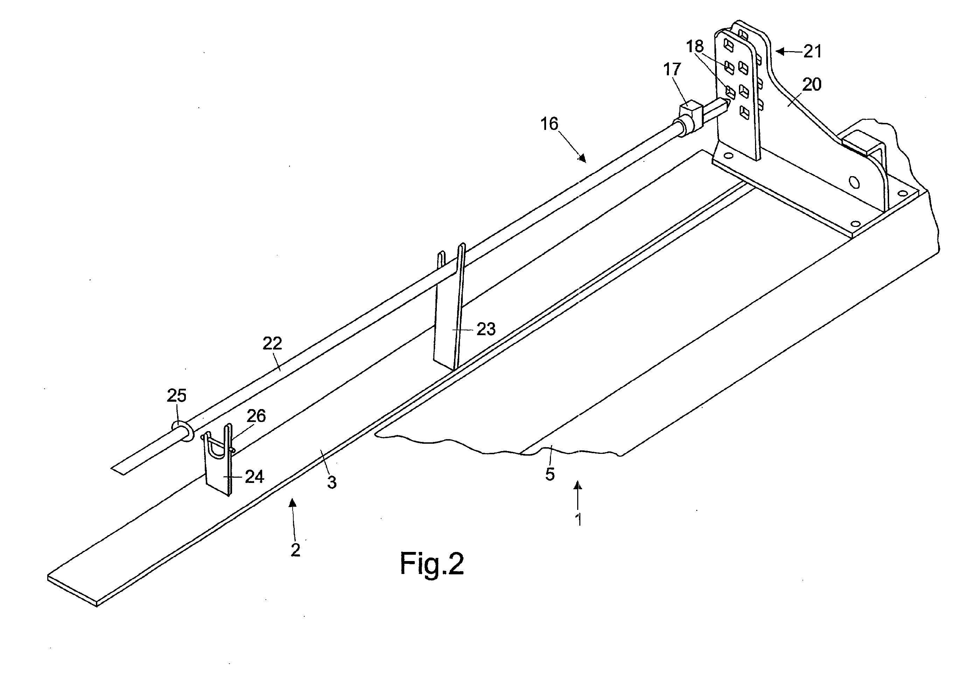

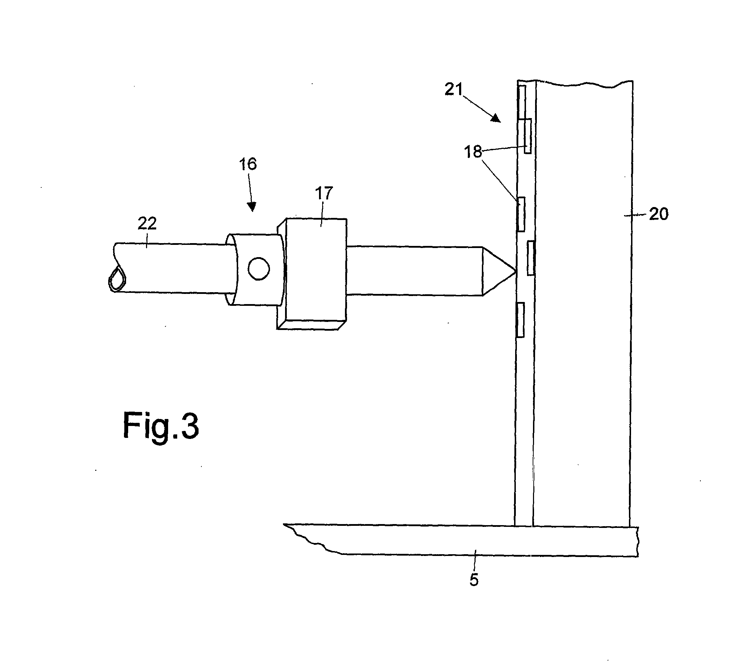

Bei dem Ausführungsbeispiel gemäß Fig. 2 und 3 ist hinter der Geräteeinheit 1 wiederum die Walze 2 angeordnet. Hierbei ist die Stelleinrichtung 16 als versetzbarer Bolzen 17 ausgebildet, der in unterschiedliche Bohrungen 19 der Anschlussstelle 20, die eine Lochreihe 21 aufweist einsetzbar ist. Um die Stelleinrichtung 16, die von dem Außenbereich des Bodenbearbeitungsgerätes 1 entfernt liegt, von dem Außenbereich einstellen zu können, ist dem Bolzen 17 eine vom Außenbereich betätigbare Stange 22 zugeordnet. Die Stange 22 ist etwa in der Mitte zwischen dem Außenbereich der Geräteeinheit 1 und dem Bolzen 17 in einem Schiebeführungselement 23, welche am der Geräteeinheit oder an der Nachlaufwalze 2 angeordnet ist, zum Einsetzen der Bolzen 17 in eine Bohrung 18 geführt und abgestützt. Der Bolzen 17 ist im begrenzten Umfang beweglich an der Stange 22 befestigt. Die Beweglichkeit des Bolzens 17 beträgt etwa 4 bis 5 Grad, vorzugsweise 6 Grad gegenüber der Stange. Der Bolzen 17 ist im Ausführungsbeispiel als Exzenterbolzen ausgebildet, somit können weniger Bohrungen 18 in der Anschlussstelle 20 Einstellvorrichtungen vorgesehen sein, um dennoch durch entsprechend verdrehte Einsetzung des Exzenterbolzens 17 eine fein abgestufte Einstellung zu erreichen. Um vom Außenbereich über die Stange 22 den entfernten Bolzen 17 umsetzen zu können, wird die Stange 22 auf das Schiebeführungselement 23 aufgelegt, so dass die Stange 22 mit dem Bolzen 17 aus dem Loch 18 herausgezogen werden kann und dann über die Stange 22 wieder über ein anderes Loch 18 eingesetzt werden kann. Nach dem Einsetzen des Exzenterbolzens 17 in das gewünschte Loch, um die gewünschte Tiefeneinstellung zu gewährleisten wird die Stange 22 in das Fixierungselement 24 eingelegt. Um zu verhindern, dass der Bolzen 17 aus der dem Loch 18 herausfallen kann, ist an der Stange 22 das als Ring ausgebildete Sicherungselement 25 angebracht. Das Sicherungselement 25 kommt hinter dem Fixierungselement 24 in den Fixierungselement 24 wird das als Stecker ausgebildete Sicherungselement 26 an dem Fixierungselement 24 angebracht, so dass der Bolzen gesichert ist und nicht aus dem Loch 18 heraus wandern kann.

## Patentansprüche

1. Bodenbearbeitungsgerät mit mehreren Geräteeinheiten, die mit vor- oder nachgeordneten Bearbeitungsorganen, wie beispielsweise Walzen, Planierbalken ausgestattet sind, wobei jedes Bearbeitungsorgan jeweils über zumindest zwei Arme höhenverstellbar mit den Geräteeinheiten verbunden und über die Arbeitstiefe der Geräteeinheiten vorgebende Stelleinrichtung einstellbar ist, wobei jedem Arm eine Stelleinrichtung zugeordnet ist und zumindest die einer Geräteeinheit zugeordneten Stelleinrichtungen von einer zentralen Stelle aus betätigbar sind, **dadurch gekennzeichnet, dass** die Stelleinrichtungen (8)als Exzenterscheiben (7,7',7'') ausgebildet sind, dass die Exzenterscheiben einer Geräteeinheit auf einer drehbar gelagerten Stange (10) drehfest angeordnet sind, dass der Stange (10) eine Fixierungseinrichtung (11) zugeordnet ist.

2. Bodenbearbeitungsgerät nach Anspruch 1, **dadurch gekennzeichnet, dass** die Fixierungseinrichtung (11) als Lochscheibe ausgebildet ist und mit einem Bolzen (12) zusammenwirkt.

3. Bodenbearbeitungsgerät nach Anspruch 1, **dadurch gekennzeichnet, dass** die Exzenterscheibe (7,7',7'') auf ihrem Umfang Einkerbungen (14) aufweist, welche mit an dem Arm (4) angeordneten Erhebungen (15,15',15'') zusammenwirkt.

4. Bodenbearbeitungsgerät mit mehreren Geräteeinheiten, die mit vor- oder nachgeordneten Bearbeitungsorganen, wie beispielsweise Walzen, Planierbalken ausgestattet sind, wobei jedes Bearbeitungsorgan jeweils über zumindest zwei Arme höhenverstellbar mit den Geräteeinheiten verbunden und über die Arbeitstiefe der Geräteeinheiten vorgebende Stelleinrichtung einstellbar ist, wobei jedem Arm eine Stelleinrichtung zugeordnet ist und zumindest die einer Geräteeinheit zugeordneten Stelleinrichtungen von einer zentralen Stelle aus betätigbar sind, **dadurch gekennzeichnet, dass** die Stelleinrichtung (16) als versetzbarer Bolzen (17) ausgebildet ist, dass der von dem Außenbereich des Bodenbearbeitungsgerätes entfernt liegende Bolzen (17) an einer von dem Außenbereich des Bodenbearbeitungsgerätes betätigbaren Stange (22) angeordnet ist.

5. Bodenbearbeitungsgerät nach Anspruch 4, **dadurch gekennzeichnet, dass** der Bolzen (17) im begrenzten Umfang beweglich an der Stange (22) befestigt ist.

6. Bodenbearbeitungsgerät nach Anspruch 5, **dadurch gekennzeichnet, dass** die Beweglichkeit des Bolzen (17) etwa 4 bis 10 Grad, vorzugsweise 6 Grad gegenüber der Stange (22) beträgt.

7. Bodenbearbeitungsgerät nach Anspruch 4, **dadurch gekennzeichnet, dass** die Stange (22) etwa in der Mitte zwischen dem Außenbereich der Geräteeinheit und dem Bolzen in einem Schiebeführungselement (23), welches an der Geräteeinheit angeordnet ist, führ- und abstützbar ist.

8. Bodenbearbeitungsgerät nach Anspruch 4, **dadurch gekennzeichnet, dass** der Bolzen (17) als Exzenterbolzen ausgebildet ist.
